# EUROPEAN PATENT APPLICATION

(11) **EP 0 726 405 A2**
(43) Date of publication of application: **14.08.1996**
(21) Application number: 95830521.1
(22) Date of filing: 15.12.1995
(51) Int. Cl.: F16D 43/18

(54) **Centrifugal clutch with variable adjustment of engagement**

(30) Priority: 16.12.1994 IT BO940556
(71) Applicant: C.D.C. s.n.c. DI UGO MALOSSI & C., 40012 Calderara di Reno (Bologna) (IT)
(72) Inventor: Malossi, Ugo, I-40012 Calderara Di Reno (Bologna) (IT)
(74) Representative: Coppi, Cecilia

(57) **Abstract**

A centrifugal clutch has a rotatable driving member (2) which moves to bear tangentially against a rotatable driven member (1) with a force which is a function of the speed of rotation of the driving member, the engaging surfaces of the members being friction surfaces (3), and means (13) for adjusting said function in two different ways. Two possible different ways of adjusting the function are varying the restraining force of a return spring (6) opposing the centrifugal force and varying the position of the barycentre of the rotatable driving member, in order to adjust the speed at which the clutch engages.

## Description

The preset invention relates to a centrifugal clutch with variable adjustment of the engagement speed.

This functions on the principle whereby masses made to rotate about a shaft tend to move away from the shaft, acquiring an energy due to the centrifugal force which is proportional to the square of the number of revolutions of the shaft to the weight of the masses, and to the distance of the barycentre (centre of gravity) of the said masses from the rotating shaft.

If a friction surface of the masses is brought into contact with the internal surface of a drum, continuity of movement between the shaft carrying the masses and a shaft carrying the drum is achieved.

Known automatic centrifugal clutch groups have 2 or 3 centrifugal masses acting against associated opposition springs and do not offer the possibility of adjustment unless substantial mechanical modifications are made and therefore the rotational speed at which the clutch engages cannot be adjusted.

It is the aim and advantage of the invention to provide a system which allows simple adjustment. The invention is set out in claim 1.

Realisation of this system can be achieved with an adjusting segment for the opposition spring (which may be cylindrical helical extension springs) and/or with fixing additional masses displaceable in a varying manner.

The segment for adjusting the springs enables the pre-tensioning force imparted to the spring itself to be varied by varying the equilibrium of the centrifugal forces and reactions of the springs which determines operation of the clutch itself. The speed at which the clutch engages can also be adjusted by varying the mass and/or its fixing position, thus modifying the position of the barycentre of the centrifugal masses and hence the equilibrium of the centrifugal forces. Selected masses of different magnitudes can be secured together or the same masses can be secured together in different relative positions.

The advantage achieved is one of optimum and personalised use with the possibility of extensive variability of non-permanent adjustment of the centrifugal clutch.

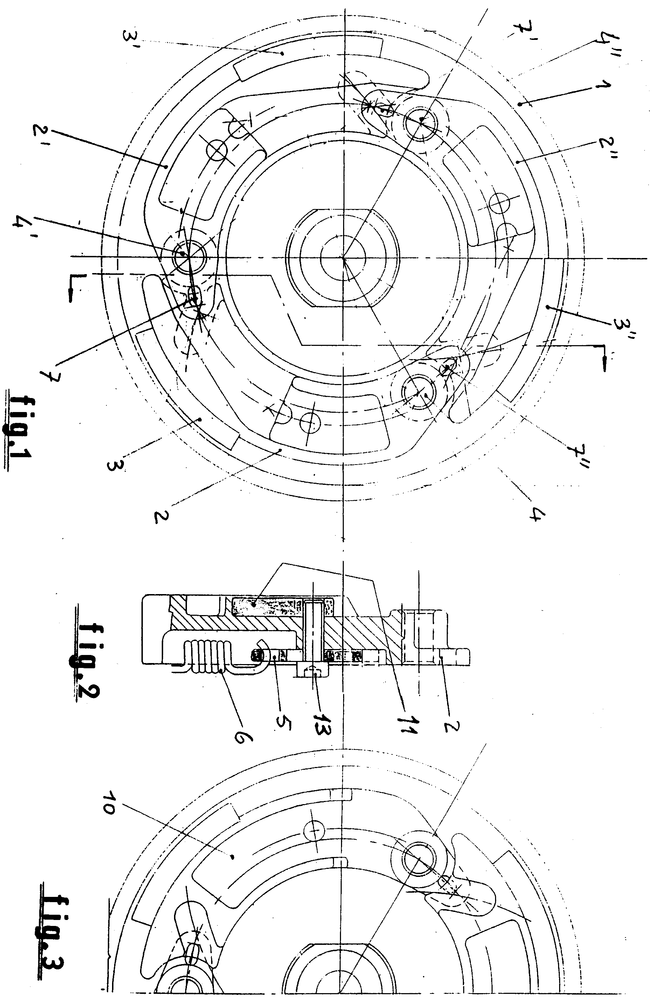

An example of the invention will now be described with reference to the accompanying drawings, in which
Fig. 1 shows a schematic view of the friction group showing the assembly of the opposition counter springs;
Fig. 2 shows a partial schematic cross-section highlighting the spring adjusting segment (the serrations are not shown) and, on the opposite side of the movable mass, the arrangement of the additional variable-displacement mass;
Fig. 3 illustrates a partial view of the said clutch group showing the assembly of the additional masses on the main masses;

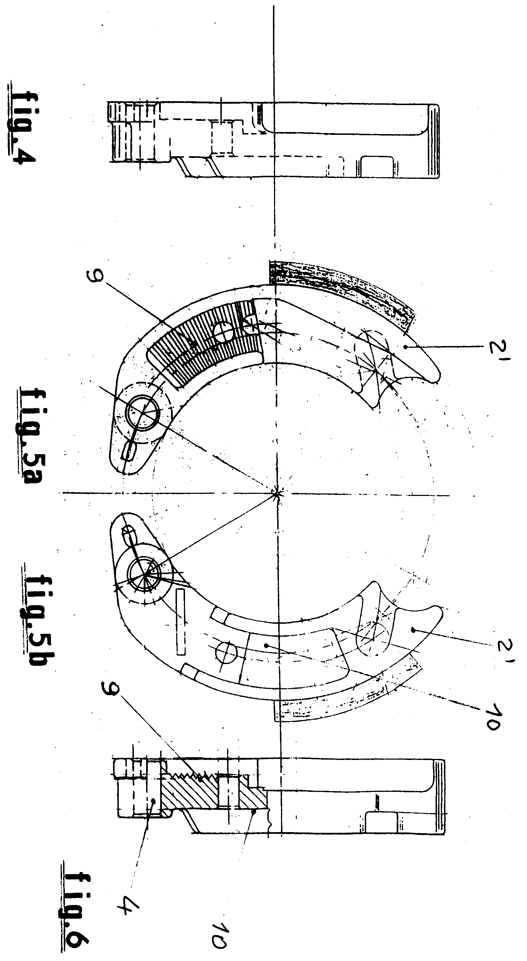

Fig. 4 shows a schematic side view of a movable mass viewed from the inside of its assembly circumference;
Fig. 5a shows a schematic plan view of the movable mass on the side for assembly of the return-spring adjusting segment;
Fig. 5b shows, like the preceding figure, a plan view of the opposite side of the movable mass with the seat for fixing the additional mass;
Fig. 6 shows a view from the inside and a partial section through the said movable mass of Fig. 5b with the zone for coupling the serrated spring-attachment segment;
Fig. 7 shows a top view A, side view B and bottom view C of the serrated segment for variable adjustment of the return spring;

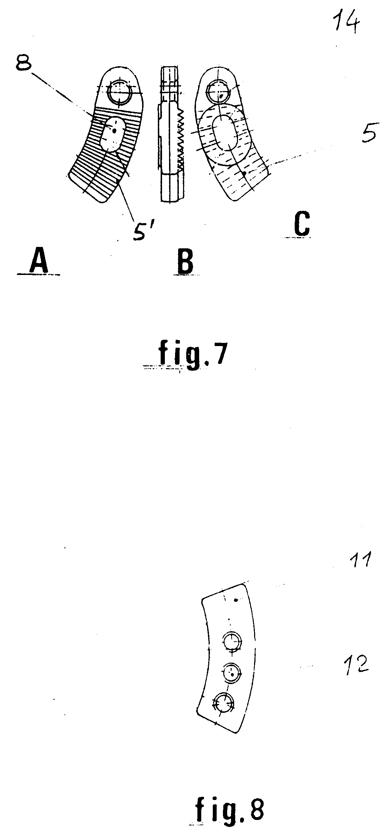

Fig. 8 shows a schematic plan view of an additional variable-displacement mass.

The centrifugal clutch group consists of two parts: a bell-piece 1 integral with the transmission downstream of the clutch, and the actual clutch composed of a disc integral with the transmission from the engine, on which the movable masses 2, 2', 2'', hingeably mounted on the pins 4, 4', 4'', rotate as a result of the centrifugal force, bringing friction surfaces 3, 3', 3'' of the segments into contact with the internal surface of the bell-piece 1, and effect transmission of the engine drive owing to the friction between friction surfaces and bell-piece.

The opposition springs 6 keep the movable masses 2, 2', 2'' towards the centre of the system until the speed of rotation of the clutch generates a high enough centrifugal force on the movable masses to overcome the force of the opposition springs and produce transmission of the movement between clutch and bell-piece.

The two degrees of freedom consist in the possibility of varying both the tension of the counter springs by displacing the point of attachment 5 relative to the main mass of the segment 2 and the barycentric position of the movable masses by displacing the additional mass 11 relative to the main mass of the segment 2 by means of fixing with the screw 13 in one or other of the two threaded holes 12 for performing locking. The additional mass could also be fixed in a different relative position by rotating about the screw 13.

Furthermore it is possible to modify the weight and thickness of the mass 11 (ie, by selecting one of a plurality of different masses 11) in order to obtain variation of the overall centrifugal force and the barycentre of the movable mass.

The springs 6 are secured to plates 5 formed with an eyelet 8 (see Fig. 7). By displacing the plate 5 within the travel permitted by the eyelet 8, through which a fixing screw 13 passes, the load of the springs is varied.

With the two degrees of freedom, it is possible, separately or simultaneously, to vary the tension of the spring 6 by displacing the plate 5 relative to the screw 13 and/or to vary the position of the additional mass 11 by inserting the fixing screw 13 in a different hole 12, as indicated above.

As shown in Fig. 6, the facing surfaces of the plate 5 and mass 2 are serrated which ensures easier adjustment in the position of the plate 5 on the mass where it will be firmly held by the screw 13 (this connection is not shown). The serrated surface of the mass is shown at 9 in Figure 6; the serrated surface of the plate 5 is shown in Fig. 7.

To summarise, with the screw 13 on each movable mass it is possible to vary both the position of the additional mass (which determines the position of the barycentre of the assembly) and the tension of the spring 6 displacing the segment 5 for adjustable fastening of the springs fixed at the other end inside the fixed eyelets 7, 7' 7''. One screw 13 serves both purposes, independently. The said screw 13 locks the whole assembly following adjustment.

The apparatus described achieves the aforementioned aims and in particular allows simple and effective adjustment of the speed at which the centrifugal clutch engages by displacing the tensioning point of the movable mass return springs and by means of displacement of the barycentric position of the said masses carrying the friction material.

## Claims

1. A centrifugal clutch in which a rotatable driving member (2) bears tangentially against a rotatable driven member (1) with a force which is a function of the speed of rotation of the driving member, the engaging surfaces (3) of the members being friction surfaces, characterised by means (13) for adjusting said function in two different ways.

2. A clutch as claimed in claim 1 wherein the rotatable driving member comprises a radially movable mass (2) and a return spring (6) restraining the mass against centrifugal acceleration and the adjusting means comprises means (13, 8) for adjusting the restraining force exerted by the spring on the mass in a given position.

3. A clutch as claimed in claim 1 or claim 2 wherein the rotatable driving member comprises a first mass (2) and means (13) for adjustably securing a second mass (11) thereto.

4. A clutch as claimed in claim 3 wherein said rotatable driving member comprises a first mass (2) and means for securing a selection of different second masses (11) thereto.

5. A clutch as claimed in claim 3 wherein said rotatable driving member comprises a first mass (2) and means for securing a second mass (11) thereto in different positions to vary the barycentre of the combined first and second masses.

6. A clutch as claimed in claim 2 wherein the means for adjusting the restraining force comprises means (13) for securing two members (2, 5) together in selected relative positions.

7. A clutch as claimed in claim 6 wherein the facing surfaces (9) of said members (2, 5) are serrated to assist the securing together of said members by said securing means (13).
